# EUROPEAN PATENT APPLICATION

(11) **EP 2 837 990 A2**
(43) Date of publication of application: **18.02.2015**
(21) Application number: 13197300.0
(22) Date of filing: 13.12.2013
(51) Int. Cl.: G06F 1/16

(54) **Flexible display apparatus**

(30) Priority: 16.08.2013 CN 201310357872
(71) Applicant: Hon Hai Precision Industry Co., Ltd., New Taipei City (TW)
(72) Inventor: Peng, Yao-Che, New Taipei (TW); Chang, Chia-Shou, New Taipei (TW)
(74) Representative: Towlson, Samantha Jayne

(57) **Abstract**

A flexible display apparatus (100) comprises a main body(10) with a casing (11) and a slot (12), a flexible portion (31), and a supporting portion (51). The flexible display portion (31) is received in the casing (11), and is capable of rolling out from the main body (100) from the slot (100). The supporting portion (100) is surrounding the main body (10) and capable of unfolding with respect to the main body (10). While the flexible display portion (31) is rolled out of the casing (11) and being straightened, the supporting portion (51) is straightened under the flexible display portion (31) for supporting the flexible display portion (31).

## Description

### Description of Related Art

Roll-up flexible display apparatuses include a main body, a flexible display screen, and a plurality of electric magnets. The flexible display screen rolled in the main body is capable of rolling out from the main body. The electric magnets are arranged at two opposite edges of the flexible display screen along the rolling direction. When powering the flexible display apparatus, each of two adjacent electric magnets generates a magnetic force for stiffening the two opposite edges of the rolled-out flexible display screen. However, the middle of the flexible display screen may be too flexible thus making touch operation difficult.

Therefore, there is room for improvement in the art.

### Summary

According to an exemplary embodiment of the invention, a flexible display apparatus comprises a main body with a casing and a slot, a flexible portion, and a supporting portion. The flexible display portion is received in the casing, and the supporting portion is surrounding the main body. While the flexible display portion is rolled out of the casing and being straightened, the supporting portion is unfolding with respect to the main body to be straightened under the flexible display portion for supporting the flexible display portion, thus the touch feeling on the flexible display portion is improved.

### BRIEF DESCRIPTION OF THE DRAWINGS

Embodiments of the invention will now be described, by way of example only, with reference to the accompanying drawings. Many aspects of the embodiments can be better understood with references to the following drawings. The components in the drawings are not necessarily drawn to scale, the emphasis instead being placed upon clearly illustrating the principles of the embodiments. Moreover, in the drawings, like reference numerals designate corresponding parts throughout two views.
FIG. 1 is a schematic view of a flexible display apparatus, according to an embodiment.
FIG. 2 is a schematic view of the flexible display apparatus of FIG. 1 being rolled out.
FIG. 3 is partially disassembled view of the flexible display apparatus of FIG. 2.
FIG. 4 is a cross section view of the flexible display apparatus of FIG. 1, taken along a line IV-IV thereof.

### DETAILED DESCRIPTION

Embodiments of the present disclosure will be described in detail with reference to the drawings.

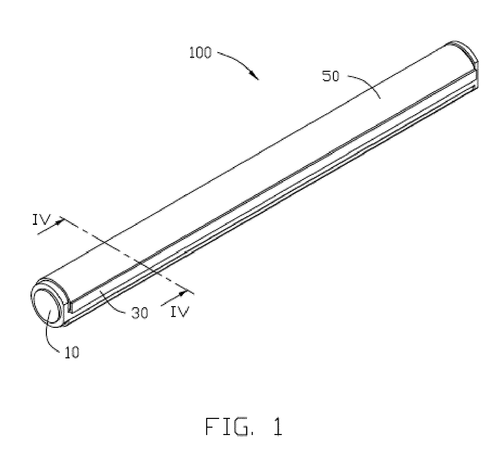

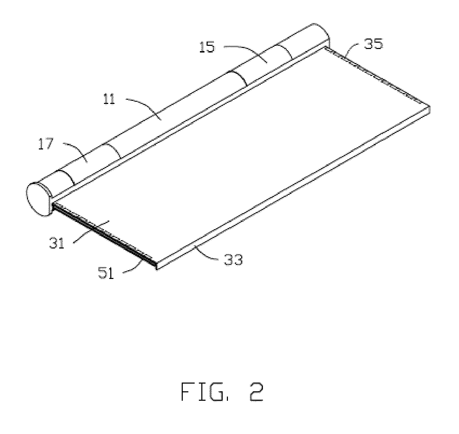

FIGS. 1-3 show a flexible display apparatus 100 of the embodiment. The flexible display apparatus 100 includes a main body 10, a flexible display mechanism 30, and a supporting mechanism 50. The flexible display mechanism 30 and the supporting mechanism 50 are capable of extending or unrolling from the main body 10, thus the supporting mechanism 50 is arranged under the flexible display mechanism 30 for supporting.

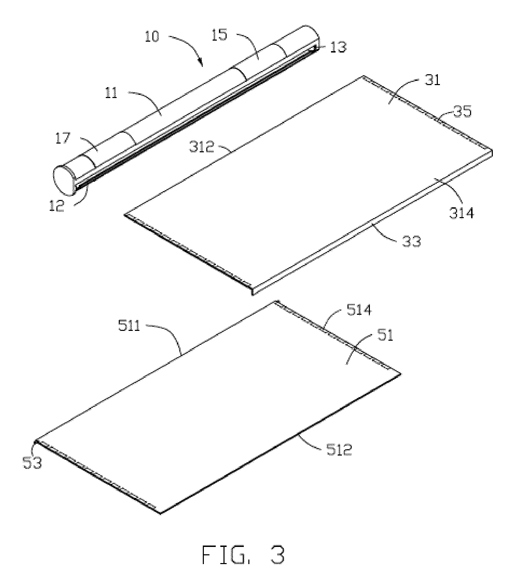

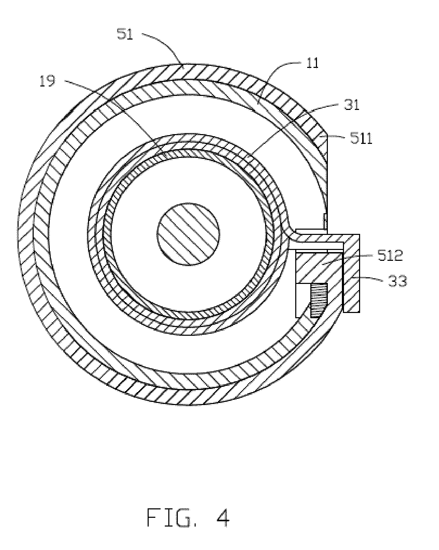

The main body 10 includes a casing 11 and a fixing shaft 19 (as shown in FIG. 4). The casing 11 is a hollow cylinder. The casing 11 defines a slot 12 about a length direction of the casing 11 and two blind holes 13 (as shown in FIG. 3). The blind holes 13 are arranged at two opposite bottom surfaces of the slot 12. The fixing shaft 19 is coaxial with the casing 11 and rotatably fixed in the casing 11. The casing 11 further includes a static display portion 15 and a control portion 17. The static display portion 15 and the control portion 17 are parallel with each other and arranged on an outer surface of the casing 11. The static display portion 15 is used for displaying feature information when the flexible display apparatus 100 is powered on. The control portion 17 rotates a predetermined angle along a clockwise direction or an anti-clockwise direction for driving the fixing shaft 19 to rotate along the clockwise direction or the anti-clockwise direction. In the embodiment, the feature information can be battery life, current state, and current time, for example; the control portion 17 can be rotated by users operations. In the other embodiment, the casing 11 is a substantially rectangular; the static display portion 15 and the control portion 17 are arranged on the bottom surface of the casing 11.

The flexible display mechanism 30 includes a flexible display portion 31, a resisting portion 33, and a plurality of first magnetic portions 35. The flexible display portion 31 is substantially rectangular. The flexible display portion 31 is rolled up on the fixing shaft 19, and is capable of unrolling with respect to the fixing shaft 19 for displaying images and texts while being straightened. The flexible display portion 31 includes a connecting end 312 and a free end 314 opposite to the connecting end 312. The connecting end 312 is fixed on the fixing shaft 19. The resisting portion 33 is arranged out of the casing 11 and is perpendicularly extended from the free end 314. The resisting portion 33 is used for limiting the position of the flexible display mechanism 30 while retracting the flexible display mechanism 30. The first magnetic portions 35 are spaced from each other in a predetermined distance and are arranged in two lines which are located on opposite edges of the flexible display portion 31. The first magnetic portions 35 rep with each other when being powered. In the embodiment, the magnetic portions 35 are electro magnets.

The supporting mechanism 50 is covered on the outer surface of the main body 10, and is capable of extending from the casing 11. The supporting mechanism 50 includes a supporting portion 51 and two pivots 53. The supporting portion 51 is substantially rectangular. The supporting portion 51 includes a first end 511 , a second end 512 opposite to the first end 511, and a plurality of second magnetic portions 514. The first end 511 is covered on the casing 11, and the second end 512 is rotatably received in the casing 11. The second end 512 is substantially L shaped. The distance between the first end 511 and the second end 512 while the supporting mechanism 50 is extended is equal to the distance between the connecting end 312 and the resisting portion 33 while the flexible display mechanism 30 is extended. The second magnetic portions 514 correspond to the first magnetic portions 35 in a one-to-one relationship. Two pivots 53 are arranged on two opposite bottom surfaces of the second end 512, and facing the blind holes 13. In other embodiments, the first end 511 adheres to the casing 11 with VELCRO. The second magnetic portions 514 are electro magnets.

FIG. 4 shows a cross section of the flexible display apparatus 100. The two pivots 53 are received in the blind holes 13 respectively for rotatably fixing the second end 512 on the casing 11. The flexible display mechanism 30 is rolled in and received in the casing 11, the flexible display portion 31 sleeved on the fixing shaft 19, and the resisting portion 33 is resisted on the casing 11. The supporting mechanism 50 is covered on the casing 11. The flexible display mechanism 30 is rolled out from the casing 11 and unfolded by operating on the control portion 17 and the resisting portion 33 away from the casing 11. Then, the supporting mechanism 50 is rotated along the antic-clockwise direction by manually operation the first end 511. When the first end 511 is aligned with the resisting portion 33, the supporting mechanism 50 is under the flexible display mechanism 30. By powering the first magnetic portions 35, the two opposite edges of the flexible display portion 31 are straightened, and the second magnetic portions 514 are attracted to the corresponding first magnetic portions 35 for straightening the supporting mechanism 50 and supporting the flexible display portion 31. In the embodiment, the fixing shaft 19 is rotated along the clockwise direction by rotating the control portion 17 to a predetermined angle along the clockwise direction.

For retracting the flexible display mechanism 30 in the casing 11, the first magnetic portions 35 are powered off. The supporting mechanism 50 is rotatable along the clockwise direction and covering on the casing 11. The fixing shaft 19 is rotated along the anti-clockwise direction for rolling in the flexible display mechanism 30 by operating the control portion 17 until the resisting portion 33 resists with the casing 11. In the embodiment, the fixing shaft 19 is rotated along the anti-clockwise direction by rotating the control portion 17 in a predetermined angle along the anti-clockwise direction.

In use, the flexible display portion 31 is supported by the straightened supporting mechanism 50. Therefore, the hardness of the flexible display portion 31 is increased, and the touch operation on the flexible display portion 31 is improved.

While various exemplary and preferred embodiments have been described, the disclosure is not limited thereto. On the contrary, various modifications and similar arrangements (as would be apparent to those skilled in the art) are intended to also be covered. Therefore, the scope of the appended claims should be accorded the broadest interpretation so as to encompass all such modifications and similar arrangements.

## Claims

1. A flexible display apparatus, comprising:
a main body with a casing and a slot;
a flexible display portion received in the casing and capable of rolling out from the main body through the slot; and
a supporting portion surrounding the main body;
wherein while the flexible portion is rolled out of the casing and being straightened, the supporting portion is unfolded with respect to the main body to be straightened under the flexible display portion for supporting the flexible display portion.

2. The flexible display apparatus of claim 1, wherein the supporting portion comprises a plurality of first magnetic portions; the first magnetic portions are attracted to the straightened flexible display portion while the supporting portion is unfolded with respect to the main body under the flexible display portion.

3. The flexible display apparatus of claim 2, wherein the flexible display portion comprises a plurality of second magnetic portions; the first magnetic portions correspond to the second magnetic portions in a one-to-one relationship; while the flexible display apparatus being powered on, the second magnetic portions are repelled with each other for straightening the flexible display portion, and the first magnetic portions are attracted to the corresponding second magnetic portions for straightening the supporting mechanism.

4. The flexible display apparatus of claim 3, wherein the second magnetic portions are spaced from each other in a predetermined distance and are arranged in two lines which are located on opposite edges of the flexible display portion.

5. The flexible display apparatus of any preceding claim, further comprising two opposite pivots, wherein the pivots are mounted on an end of the supporting portion and received in the casing for rotatably fixing the supporting portion on the main body.

6. The flexible display apparatus of claim 5, wherein the casing defines two blind holes; the two blind holes are adjacent to the slot and correspond to the pivots respectively.

7. The flexible display apparatus of any preceding claim, further comprising a resisting portion, wherein the resisting portion is perpendicularly extended from an end of the flexible display portion; the resisting portion resists the casing for limiting the position of the flexible display portion while the flexible display portion is received in the casing.

8. The flexible display apparatus of any preceding claim, wherein the main body further comprises a control portion; the control portion rotate rotates a predetermined angle along a clockwise direction or an anti-clockwise direction for controlling the flexible display portion to retract or roll out.

9. The flexible display apparatus of claim 8, wherein the control portion is mounted on the casing.

10. The flexible display apparatus of claim 8 or 9, wherein the main body further comprises a fixing shaft; the fixing shaft is rotatably received in the casing; an end of the flexible display portion is fixed on the fixing shaft; the control portion is used for driving the fixing shaft to rotate for rolling in or rolling out the flexible display portion.

11. The flexible display apparatus of any preceding claim, wherein the main body further comprises a static display portion; the static display portion is mounted on the casing; the static display portion displays feature information of the flexible display apparatus while the flexible display apparatus is being powered on.
